(19) Europäisches Patentamt
European Patent Office
Office européen des brevets

(11) **EP 3 652 033 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **18730322.7**

(22) Anmeldetag: **06.06.2018**

(51) Internationale Patentklassifikation (IPC):
**B60W 20/11** (2016.01)      **B60W 20/15** (2016.01)

(52) Gemeinsame Patentklassifikation (CPC):
**B60W 20/11; B60W 20/15;** B60K 6/48;
B60W 2050/0013; Y02T 10/40; Y02T 10/62

(86) Internationale Anmeldenummer:
**PCT/EP2018/064809**

(87) Internationale Veröffentlichungsnummer:
**WO 2019/011533 (17.01.2019 Gazette 2019/03)**

(54) **VERFAHREN ZUM BETREIBEN EINES HYBRIDFAHRZEUGS**

CONTROL METHOD FOR HYBRID VEHICLE

PROCÉDÉ DE CONTRÔLE POUR VÉHICULE HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2017 DE 102017211980**

(43) Veröffentlichungstag der Anmeldung:
**20.05.2020 Patentblatt 2020/21**

(73) Patentinhaber: **Bayerische Motoren Werke Aktiengesellschaft**
**80809 München (DE)**

(72) Erfinder: **HORNBACHNER, Johannes**
**4400 Steyr (AT)**

(56) Entgegenhaltungen:
DE-A1- 102005 044 828      DE-A1- 102017 109 290
FR-A1- 3 068 322

- JURIJ SCHMIDGAL: "Verfahren zur echtzeitfähigen simulation dynamischer emissionsverläufe ausgewählter schadstoffe von ottomotoren", 14 September 2011 (2011-09-14), Universität Kassel, XP055503603, Retrieved from the Internet <URL:https://kobra.bibliothek.uni-kassel.de/bitstream/urn:nbn:de:hebis:34-2011091439074/3/DissertationJurijSchmidgal.pdf> [retrieved on 20180831]

**Beschreibung**

Die Erfindung betrifft ein Verfahren zum Betreiben eines Hybridfahrzeugs, insbesondere eines Diesel-Hybridfahrzeugs, mit einem Verbrennungsmotor und einem Elektroantrieb, wobei eine zum Antreiben des Fahrzeugs aufgebrachte Gesamtleistung gemäß einem Aufteilungsverhältnis auf den Verbrennungsmotor und den Elektroantrieb aufgeteilt wird.

In Bezug auf das Ladezustandsmanagement eines Hybridfahrzeugs sind echtzeitfähige optimierungsbasierte Betriebsstrategien bekannt, die auf einem Motorsteuergerät oder anderen Fahrzeugsteuergeräten implementiert sind. Ein Beispiel hierfür ist die sogenannte "Equivalent Consumption Minimization Strategy (ECMS)". Eine Entscheidungsgrundlage der Betriebsstrategie bildet dabei unter anderem die Kohlendioxidemission des Verbrennungsmotors und, direkt daran gekoppelt, der Kraftstoffverbrauch des Verbrennungsmotors. Das Emissionsverhalten des Verbrennungsmotors wird dabei innerhalb der Betriebsstrategie anhand von Messdaten aus dem stationären Verbrennungsmotorbetrieb abgebildet.

Die Emissionen eines Verbrennungsmotors, insbesondere eines Dieselmotors, können im transienten Betrieb, also beispielsweise bei starken Beschleunigungsvorgängen, wesentlich vom stationären Betrieb abweichen. Die Betriebsstrategie trifft in diesem Fall eventuell suboptimale Entscheidungen bezüglich der Leistungsverteilung zwischen Verbrennungsmotor und Elektroantrieb, wodurch ein nicht optimaler Lastpunkt des Verbrennungsmotors und damit ein nicht optimaler Kraftstoffverbrauch gewählt wird.

Die DE 10 2005 044 828 A1 offenbart ein Verfahren zum Betreiben eines Hybridfahrzeugs, bei dem Betriebspunktdaten in einem ersten Schritt unter Verwendung eines abgespeicherten Kennlinienfelds ermittelt werden. In einem zweiten Schritt werden die Betriebspunktdaten unter Berücksichtigung des dynamischen Verhaltens der Fahrzeugaggregate optimiert.

Die wissenschaftliche Veröffentlichung "Verfahren zur echtzeitfähigen Simulation dynamischer Emissionsverläufe ausgewählter Schadstoffe von Ottomotoren" von Jurij Schmidgal beschreibt ein weiteres Verfahren, bei dem das dynamische Verhalten von Fahrzeugaggregaten bei der Ermittlung der Betriebspunktdaten berücksichtigt wird.

Aufgabe der Erfindung ist es daher, ein Verfahren bereitzustellen, bei dem auch in einem transienten Betrieb des Verbrennungsmotors ein optimaler Lastpunkt des Verbrennungsmotors gewählt wird.

Die Aufgabe wird erfindungsgemäß gelöst durch ein Verfahren gemäß Anspruch 1. Da statt statischer Größen dynamische Größen herangezogen werden, um den optimalen Lastpunkt zu bestimmen, können veränderten Leistungscharakteristiken im transienten Betrieb des Verbrennungsmotors berücksichtigt werden, die bei Verwendung statischer Größen nicht berücksichtigt werden können. Durch Berücksichtigung dieser veränderten Leistungscharakteristiken kann der Lastpunkt des Verbrennungsmotors besser eingestellt und damit der Kraftstoffverbrauch gesenkt werden.

Im transienten Betrieb unterscheidet sich, insbesondere aufgrund von Ladedruckverschiebung und Lambdaverschiebung, der Wirkungsgrad des Verbrennungsmotors vom stationären Wirkungsgrad. Dadurch, dass dieser Unterschied berücksichtigt wird, kann der optimale Lastpunkt des Verbrennungsmotors besser bestimmt werden. Insbesondere wird auch eine Lastpunktverschiebung bestimmt, das heißt eine Verschiebung des Lastpunkts des Verbrennungsmotors durch ein vom Elektroantrieb ausgeübtes Drehmoment.

Der transiente Wirkungsgrad des Verbrennungsmotors wird dabei mittels einer linearen Näherung bestimmt. Dadurch wird der rechnerische Aufwand reduziert und somit die Bestimmung des transienten Wirkungsgrads erleichtert und beschleunigt.

Erfindungsgemäß wird der optimale Lastpunkt des Verbrennungsmotors durch Extremieren einer Hamilton-Funktion bestimmt, insbesondere durch Maximieren oder Minimieren. Dies geschieht insbesondere mittels des Extremalprinzips (je nach Vorzeichenkonvention Maximalprinzip oder Minimalprinzip) von Pontryagin.

Dabei umfasst die Hamilton-Funktion die Zeitableitung des dynamischen Kraftstoffverbrauchs des Verbrennungsmotors. Der dynamische Kraftstoffverbrauch eignet sich besonders gut als Richtgröße für das Verfahren, da der Kraftstoffverbrauch direkt mit dem Kohlendioxidausstoß des Hybridfahrzeugs gekoppelt ist, der meist unter einem gewissen Niveau gehalten werden soll. Zudem wird der Kraftstoffverbrauch in modernen Fahrzeugen, beispielsweise zur Anzeige auf einer Anzeigevorrichtung eines Bordcomputers, sowieso gemessen und steht damit ohne weiteren Messaufwand zur Verfügung.

Erfindungsgemäß umfasst die Hamilton-Funktion wenigstens eine Zwangsbedingung, gemäß der die Batterie eine Differenz aus einer gesamten Antriebsleistung und einer Verbrennungsmotorleistung sowie auftretende elektrische Verluste einspeisen muss. Zusätzlich können eine oder mehrere weitere Bedingungen, die das Hybridfahrzeug während des Betriebs erfüllen muss, berücksichtigt werden.

Ein Aspekt sieht vor, dass während des Betriebs des Hybridfahrzeugs in gewissen Zeitabständen der aktuelle transiente Wirkungsgrad bestimmt wird. Dadurch kann der Lastpunkt des Verbrennungsmotors stets an die aktuell geforderte Last angepasst werden. Dadurch wird auch bei veränderlicher Last ein optimaler Lastpunkt des Verbrennungsmotors eingestellt und der Kraftstoffverbrauch optimiert.

Gemäß einer Ausgestaltung der Erfindung wird der dynamische Kraftstoffverbrauch des Verbrennungsmotors mittels eines Polynoms zweiten Grades in der Verbrennungsmotorleistung modelliert. Dies liefert eine höhere Genauigkeit als eine lineare Näherung. Zudem soll der Kraftstoffverbrauch optimiert, das heißt minimiert werden. In der Nähe eines Extremums einer Funktion liefert eine quadratisches Polynom mit entsprechend angepassten Koeffizienten stets eine gute Näherung.

Vorzugsweise umfasst die Zwangsbedingung weiterhin eine oder mehrere der folgenden Bedingungen: Elektrische Verluste, gefordertes Gesamtdrehmoment, geforderte Gesamtleistung, maximale Stickoxidemission, maximale Kohlendioxidemission und maximaler Kraftstoffverbrauch. Insbesondere hängen die Zwangsbedingungen von Betriebsparametern des Hybridfahrzeugs ab. Durch Einbeziehen der Zwangsbedingungen können der Verbrennungsmotor und der Elektroantrieb derart angesteuert werden, dass sie in der jeweiligen Situation die optimale Leistungsverteilung zwischen Verbrennungsmotor und Elektroantrieb aufweisen. Beispielsweise könnte bei Geschwindigkeiten unter oder um 50 km/h der Verbrennungsmotor und der Elektroantrieb derart angesteuert werden, dass die Stickoxidemission reduziert wird. Da davon auszugehen ist, dass sich das Hybridfahrzeug in einer Ortschaft befindet, würde also in diesem Fall zur Emissionsreduktion mehr Leistung vom Elektroantrieb gefordert werden.

Weitere Vorteile und Eigenschaften der Erfindung ergeben sich aus der nachfolgenden Beschreibung und den Zeichnungen, auf die Bezug genommen wird. In diesen zeigen:

- Fig. 1 in einer schematischen Darstellung eine mögliche Topologie eines Antriebssystems eines Hybridfahrzeugs;

- Fig. 2 zueinander korrespondierende Diagramme, wobei im Einzelnen aufgetragen ist: (a) Kraftstoffverbrauch gegen Verbrennungsmotorleistung; (b) Kraftstoffverbrauch gegen Zeit; (c) Verbrennungsmotorleistung gegen Zeit; und (d) dynamischer Wirkungsgrad des Verbrennungsmotors gegen Zeit;

- Fig. 3 ein Diagramm des dynamischen Wirkungsgrads des Verbrennungsmotors aufgetragen gegen ein Drehmoment des Verbrennungsmotors;

- Fig. 4 eine lineare Näherung des dynamischen Wirkungsgrads von Figur 3; und

- Fig. 5 ein Diagramm des statischen Kraftstoffverbrauchs und des dynamischen Kraftstoffverbrauchs, jeweils aufgetragen gegen die Verbrennungsmotorleistung.

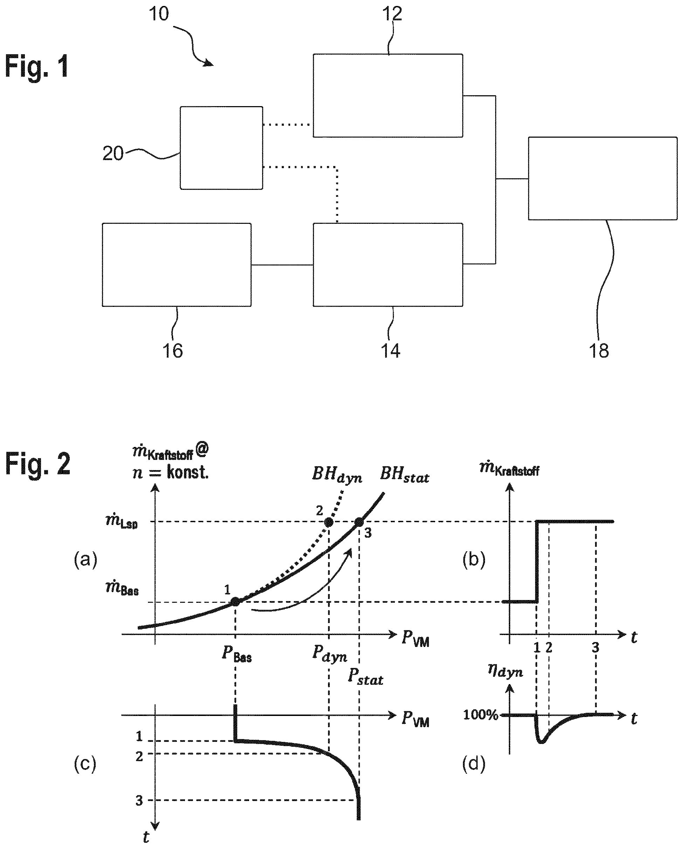

In Figur 1 ist eine mögliche Topologie eines Antriebssystems 10 eines Hybridfahrzeugs gezeigt. Das Antriebssystem 10 umfasst einen **Verbrennungsmotor** 12 sowie einen Elektroantrieb 14, der von einer Batterie 16 gespeist wird. Handelt es sich um ein Benzin-Hybridfahrzeug, so ist der Verbrennungsmotor 12 ein Ottomotor. Handelt es sich hingegen um ein Diesel-Hybridfahrzeug, so ist der Verbrennungsmotor 12 ein Dieselmotor.

Der Verbrennungsmotor 12 und der Elektroantrieb 14 sind jeweils derart gestaltet, dass sie Räder 18 des Hybridfahrzeugs antreiben können. Eine gesamte Antriebsleistung des Hybridfahrzeugs ist also gegeben durch die Summe der jeweiligen Leistung des Verbrennungsmotors 12 und des Elektroantriebs 14. Eine Steuerung 20 ist dazu konfiguriert, ein optimales Aufteilungsverhältnis der gesamten Antriebsleistung auf den Verbrennungsmotor 12 und den Elektroantrieb 14 einzustellen.

Im Folgenden wird eine Betriebsstrategie für ein Hybridfahrzeug aus dem Stand der Technik erläutert.

Bei einer aktuellen Drehzahl n wird im statischen Betrieb des Hybridfahrzeugs (also insbesondere keine Beschleunigung) eine optimale Leistung $P_{VM,opt}$ des Verbrennungsmotors 12 gesucht. Für den Kraftstoffverbrauch $\dot{m}_n$ als Funktion der Verbrennungsmotorleistung $P_{VM}$ wird dabei die quadratische Näherung

$$\dot{m}_n(P_{VM}) = \alpha_2 P_{VM}^2 + \alpha_1 P_{VM} + \alpha_0$$

angesetzt. Der Kraftstoffverbrauch ist also ein Polynom zweiten Grades in der Verbrennungsmotorleistung mit Koeffizienten $\alpha_0$, $\alpha_1$ und $\alpha_2$. Diese Koeffizienten können bei verschiedenen Drehzahlen durch Messungen bestimmt und dann zum Steuern der Betriebsstrategie verwendet werden. Zudem wird für die von der Batterie 16 abgegebene Leistung $P_{batt}$ die folgende quadratische Näherung angesetzt:

$$P_{batt} = \beta_2 [P_{FW}(t) - P_{VM}]^2 + \beta_1 [P_{FW}(t) - P_{VM}] + \beta_0 \,.$$

$P_{batt}$ stellt dabei eine Zwangsbedingung für das Antriebssystem 10 dar: Die Batterie 16 muss die Differenz aus der gesamten Antriebsleistung $P_{FW}$ und der Verbrennungsmotorleistung sowie auftretende elektrische Verluste einspeisen. $P_{batt}$ ist ebenfalls ein Polynom zweiten Grades in der Verbrennungsmotorleistung. Die Koeffizienten $\beta_i$ können wiederum bei verschiedenen Drehzahlen durch Messung bestimmt und dann zum Steuern der Betriebsstrategie verwendet werden.

Eine Hamilton-Funktion H ist dann gegeben durch:

$$H(P_{VM}, \lambda) = \dot{m}(P_{VM}) + \lambda \, P_{batt} \; .$$

Dabei ist $\lambda$ ein Lagrange-Multiplikator für die Zwangsbedingung $P_{batt}$. Gemäß Pontryagins Extremalprinzip (je nach Vorzeichenkonvention Minimalprinzip oder Maximalprinzip) lässt sich dann die optimale Verbrennungsmotorleistung bestimmen, indem die Hamilton-Funktion extremiert (je nach Vorzeichenkonvention minimiert oder maximiert) wird. Es müssen also die Gleichungen

$$\nabla_{P_{VM}, \lambda} H(P_{VM}, \lambda) = \begin{pmatrix} 2 \, \alpha_2 P_{VM} + \alpha_1 - 2 \, \lambda \, \beta_2 (P_{FW} - P_{VM}) - \lambda \, \beta_1 \\ \beta_2 (P_{FW} - P_{VM})^2 + \beta_1 (P_{FW} - P_{VM}) + \beta_0 \end{pmatrix} = \begin{pmatrix} 0 \\ 0 \end{pmatrix}$$

gelöst werden. Aus diesen beiden Gleichungen lässt sich dann sowohl der Lagrange-Multiplikator $\lambda$ als auch der optimale Lastpunkt $P_{VM,opt}$ bestimmen.

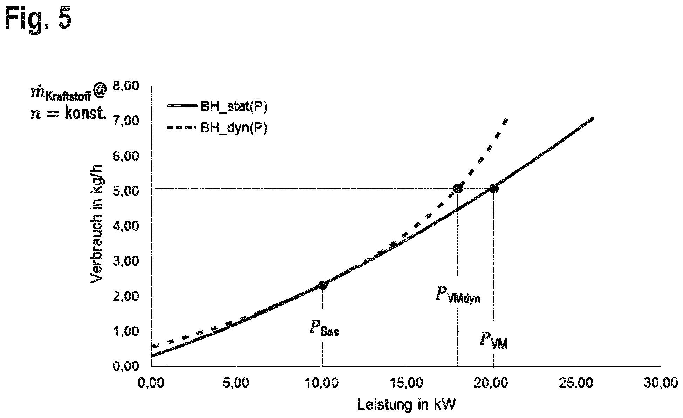

Diese Betriebsstrategie stellt den Lastpunkt des Verbrennungsmotors 12 also basierend auf Koeffizienten ein, die in einem stationären Betrieb des Hybridfahrzeugs vermessen wurden. Die Emissionen des Verbrennungsmotors 12 können jedoch in einem transienten Betrieb, also beispielsweise beim starken Beschleunigen, wesentlich vom stationären Betrieb abweichen, weswegen die Betriebsstrategie eventuell einen suboptimalen Lastpunkt für den Verbrennungsmotor 12 einstellt. Dies ist besonders gut in Figuren 2 und 5 zu erkennen: Die dynamische Kraftstoffverbrauchskurve $BH_{dyn}$ weicht deutlich von der statischen Kraftstoffverbrauchskurve $BH_{stat}$ ab.

Im Folgenden wird anhand der Figuren 1 bis 5 ein erfindungsgemäßes Verfahren zum Betreiben eines Hybridfahrzeugs erläutert, bei dem auch im transienten Betrieb des Hybridfahrzeugs ein optimaler Lastpunkt des Verbrennungsmotors 12 gewählt wird.

In Figur 2 (a) sind eine statische Kraftstoffverbrauchskurve $BH_{stat}$ sowie eine dynamische Kraftstoffverbrauchskurve $BH_{dyn}$ jeweils als Funktion der Verbrennungsmotorleistung $P_{VM}$ bei konstanter Drehzahl $n$ gezeigt. Die Figuren 2 (b), (c) und (d) zeigen die dazu korrespondierenden Zeitabhängigkeiten des **Kraftstoffverbauchs** $\dot{m}_{Kraftstoff}$ der Verbrennungsmotorleistung $P_{VM}$ beziehungsweise des dynamischen Wirkungsgrads $\eta_{dyn}$ des Verbrennungsmotors 12. Dabei wird $\eta_{dyn}$ in Einheiten des statischen Wirkungsgrads $\eta_{stat}$ angegeben, das heißt dass bei $\eta_{dyn} = 1$ gilt $\eta_{dyn} = \eta_{stat}$.

Bis zu einem Zeitpunkt 1 erfolgt der Betrieb des Hybridfahrzeugs bei konstanter Drehzahl und bei konstanter Last. Der Kraftstoffverbrauch bis zu diesem Zeitpunkt ist bei einer Leistung $P_{Bas}$ gegeben durch $\dot{m}_{Bas}$. Zum Zeitpunkt 1 erfolgt nun ein Lastsprung, beispielsweise durch ein starkes Beschleunigen des Hybridfahrzeugs. Wie in Figuren 2 (b) bis (d) zu sehen ist, steigt der Kraftstoffverbrauch quasi instantan auf den Lastpunktverbrauch $\dot{m}_{Lsp}$ an. Jedoch erreicht der Verbrennungsmotor 12 in diesem transienten Betriebszustand unter anderem aufgrund von Ladedruckabweichung und Lambdaabweichung nicht den statischen Wirkungsgrad $\eta_{stat}$, sondern nur einen reduzierten, dynamischen Wirkungsgrad $\eta_{dyn}$. Daraus resultiert, dass der Verbrennungsmotor bei gleichem Verbrauch $\dot{m}_{Lsp}$ eine Leistung $P_{dyn}$ aufweist, die kleiner ist, als die entsprechende statische Leistung $P_{stat}$.

Zu einem Zeitpunkt 2 ist der Wirkungsgrad des Verbrennungsmotors 12 noch nicht auf stationärem Niveau, nähert sich diesem jedoch an. Zum Zeitpunkt 3 ist der Lastsprung abgeschlossen, sodass nun wieder gilt $\eta_{dyn} = 1$ und $P_{dyn} = P_{stat}$. Der Verbrennungsmotor 12 arbeitet dann wieder in einem quasi-stationären Zustand. Anders ausgedrückt nähert sich die dynamische Kraftstoffverbrauchskurve $BH_{dyn}$ zwischen den Zeitpunkten 2 und 3 der statischen Kraftstoffverbrauchskurve $BH_{stat}$ an.

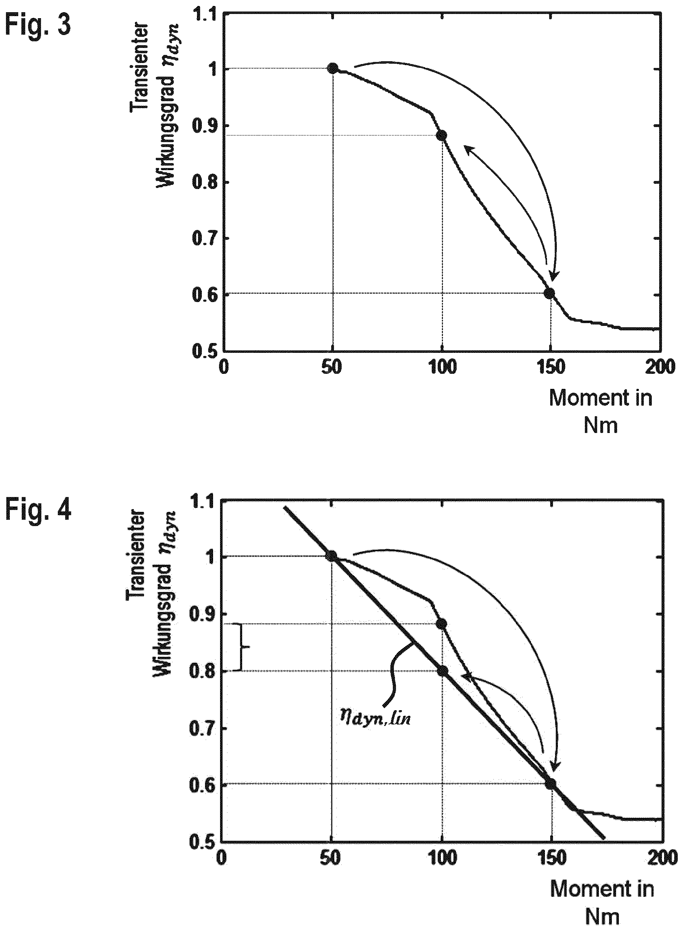

Um den optimalen Lastpunkt des Verbrennungsmotors 12 zu wählen, muss dementsprechend der dynamische Wirkungsgrad des Verbrennungsmotors 12 berücksichtigt werden. Dies wird im Folgenden anhand der Figuren 3 und 4 erläutert.

In Figur 3 ist beispielhaft eine mögliche Abhängigkeit des transienten Wirkungsgrads $\eta_{dyn}$ von der Höhe des Lastsprungs gezeigt. Im gezeigten Beispiel erfolgt der Lastsprung (oberer Pfeil in Figur 3) von einem Verbrennungsmotordrehmoment von 50 Nm mit $\eta_{dyn}(50\,Nm) = 1$ auf ein Verbrennungsmotordrehmoment von 150 Nm mit $\eta_{dyn}(150\,Nm) \approx 0,6$. Unterstützt der Elektroantrieb 14 jedoch beispielsweise den Lastsprung mit einem Drehmoment von 50 Nm, verschiebt den Lastpunkt des Verbrennungsmotors 12 also auf 100 Nm (unterer Pfeil in Figur 3), so sinkt der transiente Wirkungsgrad des Verbrennungsmotors 12 nur auf $\eta_{dyn}(150\,Nm) \approx 0,88$. Anders ausgedrückt arbeitet der Verbrennungsmotor 12 dann im transienten Bereich effizienter. Mittels des im Folgenden beschriebenen Verfahrens wird der optimale Lastpunkt des Verbrennungsmotors 12 ermittelt.

Da die Abhängigkeit des transienten Wirkungsgrads von der Lastpunktverschiebung im Allgemeinen kompliziert ist, hat sich ein linearer Ansatz als zweckmäßig erwiesen. Dies ist als $\eta_{dyn,lin}$ in Figur 4 verdeutlicht. In diesem Ansatz wird der transiente Wirkungsgrad aus den folgenden Gleichungen bestimmt:

$$\eta_{dyn}\left(P_{VM}\right) = k\,P_{VM} + \mathrm{d} \;,$$

$$k = \frac{\eta_{dyn_{t-1}} - \eta_{dyn_t}}{(P_{FW} - P_{LPV})_{t-1} - (P_{FW} - P_{LPV})_t} \;,$$

$$d = \eta_{dyn_{t-1}} - k\,(P_{FW} - P_{LPV})_{t-1} \;.$$

Die Indizes "$t$" und "$t$ - 1" deuten dabei an, dass in gewissen Zeitabständen der aktuelle transiente Wirkungsgrad bestimmt wird. Der linearisierte Zusammenhang zwischen dem Wirkungsgrad des Verbrennungsmotors 12 und dem Verbrennungsmotordrehmoment wird insbesondere unter Einbeziehung der aktuellen Werte und der Werte aus dem letzten Zeitschritt ermittelt.

Für den dynamischen Kraftstoffverbrauch wird nun folgende Gleichung herangezogen (siehe auch Figur 5):

$$\dot{m}_{dyn}\left(P_{VMdyn}\right) = \dot{m}_{stat}(P_{VM}) = \alpha_2 P_{VM}^2 + \alpha_1 P_{VM} + \alpha_0 \;.$$

Dabei gelten die folgenden drei Gleichungen:

$$(i) \qquad P_{VMdyn} = P_{Bas} + (P_{VM} - P_{Bas})\eta_{dyn} =$$
$$= \frac{1}{k}\left((2d + k\,P_{VM})(k\,P_{VM} - 1) + d^2 + 1\right) \;,$$

$$(ii) \qquad \eta_{dyn} = k\,P_{VM} + d \;,$$

$$\eta_{dyn}(P_{Bas}) = 1 \;\text{ und damit } P_{Bas} = \frac{1-d}{k} \;.$$

Zur Bestimmung des optimalen Lastpunkts des Verbrennungsmotors wird nun die folgende Hamilton-Funktion H herangezogen:

$$H\left(P_{VMdyn}, \lambda\right) = \dot{m}_{dyn}\left(P_{VMdyn}(P_{VM})\right) + \lambda\,P_{batt} \;.$$

**Die Hamilton-Funktion** umfasst also die Zeitableitung des dynamischen Kraftstoffverbrauchs des Verbrennungsmotors 12 sowie einen Lagrange-Multiplikator $\lambda$ und, in Analogie zum eingangs diskutierten stationären Fall, die Zwangsbedingung $P_{batt}$. Die Hamilton-Funktion ist somit ein Polynom zweiten Grades in der dynamischen Verbrennungsmotorleistung.

Gemäß Pontryagins Extremalprinzip (je nach Vorzeichenkonvention Minimalprinzip oder Maximalprinzip) wird nun die optimale Verbrennungsmotorleistung bestimmt, indem die Hamilton-Funktion extremiert (je nach Vorzeichenkonvention minimiert oder maximiert) wird. Es werden also die Gleichungen

(iv)

$$\frac{dH(P_{VMdyn}(P_{VM}),\lambda)}{dP_{VM}} = \frac{dH(P_{VMdyn}(P_{VM}),\lambda)}{dP_{VMdyn}}\,\frac{dP_{VMdyn}}{dP_{VM}} = 0 \;,$$

(v)

$$\frac{dH(P_{VMdyn}(P_{VM}),\lambda)}{d\lambda} = 0 \;,$$

gelöst. Aus den beiden Gleichungen (iv) und (v) wird dann unter Verwendung der Gleichungen (i) bis (iii) sowohl der Lagrange-Multiplikator $\lambda$ als auch der optimale Lastpunkt $P_{VM,opt}$ bestimmt. Der optimale Lastpunkt ergibt sich zu

$$P_{VM,opt} = \frac{-b \pm \sqrt{b^2 - 4ac}}{2a},$$

mit $a = 4\lambda\beta_2 k$, $b = 2(\alpha_2 + \lambda\beta_2(2d - 2k\,P_{FW} - 1) - \lambda\beta_1 k)$ und $c = \alpha_1 + 2\,\lambda\,\beta_2 P_{FW}(1 - 2d) - 2\,\lambda\,\beta_1 d + \lambda\,\beta_1$. Es sei erwähnt, dass dies für den Grenzfall des stationären Betriebs, also für $\eta_{dyn} = 1$, $k = 0$ und $d = 1$ die Lösung für den stationären Betrieb reproduziert. Die Koeffizienten $\alpha_i$ und $\beta_i$ sind aus dem stationären Betrieb bekannt und stehen damit für das Verfahren zur Verfügung.

Mit entsprechenden Abänderungen können alternative oder zusätzliche Zwangsbedingungen in das Verfahren implementiert werden. Alternative oder zusätzliche Zwangsbedingungen können beispielsweise durch ein gefordertes Gesamtdrehmoment, eine geforderte Gesamtleistung, eine maximale Stickoxidemission, eine maximale Kohlendioxidemission und/oder einen maximalen Kraftstoffverbrauch gegeben sein. Dazu werden entsprechend der Methode der Lagrange-Multiplikatoren die zusätzlichen Zwangsbedingungen jeweils mittels einer Gleichung $f_i(P_{VM}, c_j)$ dargestellt ($c_j$ bezeichnet hier eventuelle weitere Variablen und Parameter) und mit einem Lagrange-Multiplikator $\lambda_i$ in die Hamilton-Funktion aufgenommen. Für eine natürliche Zahl $N$ von Zwangsbedingungen ergibt sich dann für die Hamilton-Funktion

$$H\left(P_{VMdyn}, \lambda_i\right) = \dot{m}_{dyn}\left(P_{VMdyn}(P_{VM})\right) + \sum_{i=1}^{N} \lambda_i f_i(P_{VM}, c_j) \ .$$

Der optimale Lastpunkt des Verbrennungsmotors wird dann analog zum oben beschriebenen Verfahren durch Extremieren der Hamilton-Funktion bestimmt.

Das beschriebene Verfahren kann vollautomatisch mittels der Steuerung 20 ausgeführt werden.

## Patentansprüche

1.  Verfahren zum Betreiben eines Hybridfahrzeugs mit einem Verbrennungsmotor (12) und einem Elektroantrieb (14), wobei der Elektroantrieb (14) von einer Batterie (16) gespeist wird,

    wobei eine zum Antreiben des Fahrzeugs aufgebrachte Gesamtleistung gemäß einem Aufteilungsverhältnis auf den Verbrennungsmotor (12) und den Elektroantrieb (14) aufgeteilt wird,
    wobei wenigstens in einem transienten Betrieb des Verbrennungsmotors (12) dynamische Größen herangezogen werden, um einen optimalen Lastpunkt des Verbrennungsmotors (12) zu bestimmen,
    wobei dass ein transienter Wirkungsgrad des Verbrennungsmotors (12) zur Bestimmung des optimalen Lastpunkts des Verbrennungsmotors (12) herangezogen wird, **dadurch gekennzeichnet, dass**
    der transiente Wirkungsgrad des Verbrennungsmotors (12) mittels einer linearen Näherung bestimmt wird,
    wobei der optimale Lastpunkt des Verbrennungsmotors (12) durch Extremieren einer Hamilton-Funktion bestimmt wird, wobei die Hamilton-Funktion die Zeitableitung des dynamischen Kraftstoffverbrauchs des Verbrennungsmotors (12) umfasst, und
    wobei die Hamilton-Funktion wenigstens eine Zwangsbedingung umfasst, gemäß der die Batterie (16) eine Differenz aus einer gesamten Antriebsleistung und einer Verbrennungsmotorleistung sowie auftretende elektrische Verluste einspeisen muss.

2.  Verfahren nach Anspruch 1, wobei während des Betriebs des Hybridfahrzeugs in gewissen Zeitabständen der aktuelle transiente Wirkungsgrad bestimmt wird.

3.  Verfahren nach einem der vorhergehenden Ansprüche, wobei der dynamische Kraftstoffverbrauch des Verbrennungsmotors (12) mittels eines Polynoms zweiten Grades in der Verbrennungsmotorleistung modelliert wird.

4.  Verfahren nach einem der vorhergehenden Ansprüche, wobei Zwangsbedingung zusätzlich eine oder mehrere der folgenden Bedingungen umfasst: Elektrische Verluste, gefordertes Gesamtdrehmoment, geforderte Gesamtleistung, maximale Stickoxidemission, maximale Kohlendioxidemission und maximaler Kraftstoffverbrauch.

## Claims

1.  Method for operating a hybrid vehicle with an internal combustion engine (12) and an electric drive (14), wherein the electric drive (14) is fed by a battery (16),

wherein a total power applied for driving the vehicle is divided between the internal combustion engine (12) and the electric drive (14) according to a distribution ratio, wherein at least in a transient operation of the internal combustion engine (12) dynamic variables are used to determine an optimal load point of the internal combustion engine (12),

wherein a transient efficiency of the internal combustion engine (12) is used for determining the optimal load point of the internal combustion engine (12), **characterised in that**

the transient efficiency of the internal combustion engine (12) is determined by means of a linear approximation, wherein the optimal load point of the internal combustion engine (12) is determined by extremising a Hamilton function, wherein the Hamilton function comprises the time derivative of the dynamic fuel consumption of the internal combustion engine (12), and

wherein the Hamilton function comprises at least one constraint condition, according to which the battery (16) must feed in a difference from a total drive power and an internal combustion engine power as well as occurring electrical losses.

2. Method according to claim 1, wherein during the operation of the hybrid vehicle the current transient efficiency is determined at certain time intervals.

3. Method according to one of the preceding claims, wherein the dynamic fuel consumption of the internal combustion engine (12) is modelled by means of a polynomial of the second degree in the internal combustion engine power.

4. Method according to one of the preceding claims, wherein the constraint condition additionally comprises one or more of the following conditions: electrical losses, demanded total torque, demanded total power, maximum nitrogen oxide emission, maximum carbon dioxide emission and maximum fuel consumption.

## Revendications

1. Procédé pour faire fonctionner un véhicule hybride avec un moteur à combustion interne (12) et un entraînement électrique (14), dans lequel l'entraînement électrique (14) est alimenté par une batterie (16),

dans lequel une puissance totale appliquée pour entraîner le véhicule est répartie entre le moteur à combustion interne (12) et l'entraînement électrique (14) selon un rapport de répartition,

dans lequel au moins dans un fonctionnement transitoire du moteur à combustion interne (12) des grandeurs dynamiques sont utilisées pour déterminer un point de charge optimal du moteur à combustion interne (12),

dans lequel un rendement transitoire du moteur à combustion interne (12) est utilisé pour déterminer le point de charge optimal du moteur à combustion interne (12), **caractérisé en ce que**

le rendement transitoire du moteur à combustion interne (12) est déterminé au moyen d'une approximation linéaire,

dans lequel le point de charge optimal du moteur à combustion interne (12) est déterminé par extrémisation d'une fonction de Hamilton, dans lequel la fonction de Hamilton comprend la dérivée temporelle de la consommation de carburant dynamique du moteur à combustion interne (12), et

dans lequel la fonction de Hamilton comprend au moins une condition de contrainte, selon laquelle la batterie (16) doit injecter une différence entre une puissance d'entraînement totale et une puissance du moteur à combustion interne ainsi que des pertes électriques se produisant.

2. Procédé selon la revendication 1, dans lequel pendant le fonctionnement du véhicule hybride le rendement transitoire actuel est déterminé à certains intervalles de temps.

3. Procédé selon l'une des revendications précédentes, dans lequel la consommation de carburant dynamique du moteur à combustion interne (12) est modélisée au moyen d'un polynôme du second degré dans la puissance du moteur à combustion interne.

4. Procédé selon l'une des revendications précédentes, dans lequel la condition de contrainte comprend en outre une ou plusieurs des conditions suivantes : pertes électriques, couple total demandé, puissance totale demandée, émission maximale d'oxydes d'azote, émission maximale de dioxyde de carbone et consommation maximale de carburant.

**Fig. 1**

**Fig. 2**

Fig. 3

Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005044828 A1